# EUROPEAN PATENT APPLICATION

(11) **EP 1 783 596 A2**
(43) Date of publication of application: **09.05.2007**
(21) Application number: 06254662.7
(22) Date of filing: 07.09.2006
(51) Int. Cl.: G06F 3/06, G06F 13/40

(54) **Electronic device and control module thereof**

(30) Priority: 08.10.2005 CN 200510108210
(71) Applicant: ASUSTeK Computer Inc., Peitou Taipei (TW)
(72) Inventor: Wang, Che-Chang, Peitou Tapei, Taiwan, R.O.C. (TW); Tsai, Wen-Lin, Peitou Tapei, Taiwan, R.O.C. (TW)
(74) Representative: Chamberlain, Alan James

(57) **Abstract**

An electronic device electrically connected to a storage device is provided. The electronic device includes a second circuit board, a switching component, and a signal transformation module. The switching component at least has a first contact, a second contact, and a select switch. The first contact is electrically connected to a first circuit board, and the second contact is electrically connected to the second circuit board. And the select switch is able to be electrically connected to the first contact or the second contact. The signal transformation module is electrically connected to the storage device and the select switch.

## Description

### BACKGROUND OF THE INVENTION

### Field of Invention

The present invention relates to an electronic device and a control module, and more particularly to an electronic device and a control module that enables the sharing of the storage device.

### Description of Related Art

Nowadays, it is a multimedia information era, in which the desktop computer and the portable computer have become important tools which are indispensable in people's lives. The main difference between the portable computer and the conventional desktop computer is that the portable computer is required to be lighter weight, thinner, and smaller, so that it can be easily carried by the user, and to provide the user with the usage convenience during operations on the computer under various environments. To meet user demands for a portable computer which is lighter weight, thinner, and smaller, many portable computers do not have a built-in optical disc drive (ODD). Meanwhile, a portable computer can only have one hard disk drive (HDD) built inside, while a desktop computer can be equipped with several hard disk drives at a given time for meeting the needs for data storage.

Since many portable computer users still have the need for using ODD and external HDD, the external ODD and the external HDD have been developed accordingly. However, the additional external ODD and HDD to be carried shall bring much inconvenience to users and also departure from the trend of lighter weight, thinner and smaller units. Moreover, many users have a desktop computer and a portable computer at the same time, in which the inconvenience of backing up and exchanging of the data between the two computers increases the complexity during use.

### SUMMARY OF THE INVENTION

The object of the present invention is to provide a control module for controlling a storage device to be accessed by a first circuit board or a second circuit board.

Another object of the present invention is to provide an electronic device for controlling a storage device to be accessed by a first circuit board or a second circuit board.

The present invention provides a control module, which is electrically connected with a storage device, a first circuit board, and a second circuit board. The control module includes a switching component and a signal transformation module. The switching component at least has a first contact, a second contact, and a select switch, in which the first contact is electrically connected to the first circuit board, the second contact is electrically connected to the second circuit board, and the select switch is able to be electrically connected to the first contact or the second contact. The signal transformation module is electrically connected to the storage device and the select switch.

In the aforementioned control module, the signal transformation module may further includes a third contact and a fourth contact, in which the third contact is electrically connected with the storage device, and the fourth contact is electrically connected with the switching component. Moreover, a first data type is transmitted between the third contact and the storage device based on, for example, a first protocol type, and a second data is transmitted between the fourth contact and the switching component based on, for example, a second protocol type, in which the first data type is transformed by the signal transformation module into the second data type. Additionally, the first protocol type may be an Integrated Drive Electronics (IDE) protocol, and the second protocol type may be a Universal Serial Bus (USB) protocol.

The control module, for example, further includes a third circuit board and a first port arranged at the third circuit board. A first side of the first port is electrically connected to the first contact, and a second side of the first port is electrically connected with the first circuit board. The first port, for example, is a USB port or an IEEE 1394 port.

The control module, for example, further includes a third circuit board and a second port arranged at the third circuit board. A third side of the second port is electrically connected to the second contact, and a fourth side of the second port is electrically connected with the second circuit board. The second port, for example, is a USB port or an IEEE 1394 port.

The control module, for example, further includes a third circuit board and a third port arranged at the third circuit board, in which a seventh side of the third port is electrically connected to the signal transformation module, and an eighth side of the third port is electrically connected to the storage device. The third port, for example, is an IDE port or a serial advanced technology attachment (SATA) port.

The present invention further provides an electronic device electrically connected to a storage device. The electronic device includes a second circuit board, a switching component, and a signal transformation module. The switching component has at least a first contact, a second contact, and a select switch. The first contact is electrically connected to a first circuit board, and the second contact is electrically connected to the second circuit board. The switch is able to be electrically connected to the first contact or the second contact. The signal transformation module is electrically connected with the storage device and the select switch.

In the electronic device, the signal transformation module further includes a third contact and a fourth contact, in which the third contact is electrically connected with the storage device, and the fourth contact is electrically connected with the switching component. Moreover, a first data type is transmitted between the third contact and the storage device by, for example, a first protocol type, and a second data type is transmitted between the fourth contact and the switching component by, for example, a second protocol type, in which the first data type is transformed by the signal transformation module into the second data type. Additionally, the first protocol type is an IDE protocol, and the second protocol type is a USB protocol.

The electronic device, for example, further includes a third circuit board and a first port arranged at the third circuit board. A first side of the first port is electrically connected to the first contact, and a second side of the first port is electrically connected with the first circuit board.

The electronic device, for example, further includes a third circuit board and a second port arranged at the third circuit board. A third side of the second port is electrically connected to the second contact, and a fourth side of the second port is electrically connected with the second circuit board.

The electronic device, for example, further includes a third circuit board and a third port arranged at the third circuit board. A seventh side of the third port is electrically connected to the signal transformation module, and an eighth side of the third port is electrically connected with the storage device.

The electronic device, for example, further includes a third circuit board, in which the switching component and the signal transformation module are disposed at the third circuit board.

The electronic device, for example, further includes a casing, in which the second circuit board and the storage device are disposed inside the casing, and the first circuit board is disposed outside the casing.

In summary, the storage device is enabled by the control module and the electronic device in the present invention to be accessed by the first circuit board or the second circuit board.

To make the aforementioned and other objects, features and advantages of the present invention more comprehensible, embodiments accompanied with appended drawings are described in detail below.

### BRIEF DESCRIPTION OF THE DRAWINGS

FIG. 1 is a block diagram of a control module according to a first embodiment of the present invention;

FIG. 2 is a block diagram of a control module according to a second embodiment of the present invention;

FIG. 3 is a block diagram of an electronic device according to a third embodiment of the present invention;

FIG. 4 is a block diagram of an electronic device according to a fourth embodiment of the present invention;

FIG. 5 is a block diagram of an electronic device according to a fifth embodiment of the present invention; and

FIG. 6 is a block diagram of an electronic device according to a sixth embodiment of the present invention.

### DESCRIPTION OF EMBODIMENTS

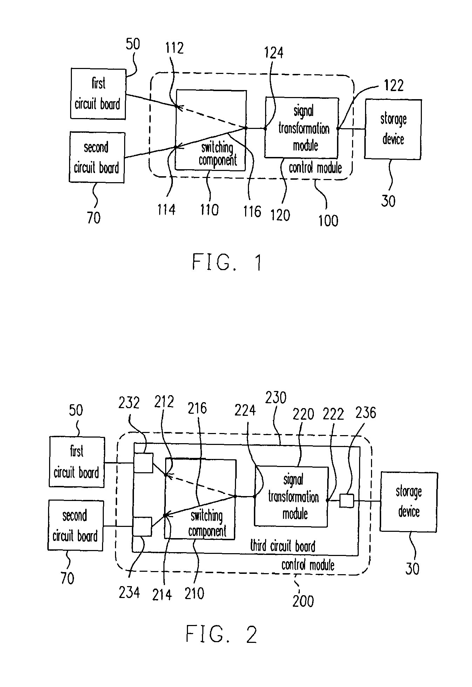

FIG.1 is a block diagram of a control module according to a first embodiment of the present invention. Referring to FIG.1, the control module 100 of the first embodiment is electrically connected with a storage device 30, a first circuit board 50, and a second circuit board 70. In this embodiment, the storage device 30 may be an optical disc drive (ODD), a hard disk drive (HDD), or other types of storage devices. The control module 100 includes a switching component 110 and a signal transformation module 120. The switching component 110 has a first contact 112, a second contact 114, and a select switch 116. The first contact 112 is electrically connected to the first circuit board 50, the second contact 114 is electrically connected to the second circuit board 70, and the select switch 116 is able to be electrically connected to the first contact 112 or the second contact 114. The signal transformation module 120 is electrically connected with the storage device 30 and the select switch 116.

Moreover, the signal transformation module 120 further includes a third contact 122 and a fourth contact 124, in which the third contact 122 is electrically connected with the storage device 30, and the fourth contact 124 is electrically connected with the switching component 110. Additionally, a first data type is transmitted between the third contact 122 and the storage device 30 based on a first protocol type, and a second data type is transmitted between the fourth contact 124 and the switching component 110 based on a second protocol type. The function of the signal transformation module 120 is to transform the first data type into the second data type so that the data of the storage device 30 can be accessed by the first circuit board 50 and the second circuit board 70. In this embodiment, the first protocol type is an IDE protocol, and the second protocol type is a USB protocol.

Specifically, in this embodiment, the first circuit board 50 is a motherboard of a portable computer, and the second circuit board 70 is a motherboard of a desktop computer, and the storage device 30 may be the optical disc drive or the hard disk drive equipped with the desktop computer. The first circuit board 50 is able to be connected to the first contact 112 by a USB transmission line, an IEEE 1394 transmission line, or other types of transmission line when the user wants to control the storage device 30 through the portable computer. At this moment, the switching component 110 is able to detect the first circuit board 50 mechanically or electronically, while the contact 124 is cut off from the second contact 114 and the first contact 112 is connected to it. Thus, the first circuit board 50 is able to connect the storage device 30 via the switching component 110 and the signal transformation module 120, and to control the storage device 30 that uses IDE, SATA, or other interface specifications by the signal transformation module 120. It should be note that when the first circuit board 50 is connected to the storage device 30, it shall be impossible to control the storage device 30 using the operating system of the second circuit board 70.

In other words, using the control module 100, the user of the portable computer is able to have the data stored in the storage device 30 of other computers (for example, a desktop computer) controlled and accessed by the first circuit board 50 without having to carry an external storage device. Thus, not only is the purchasing cost of the external storage device saved, the burden of having to carry it is avoided. And also the data in the portable computer is easily backed up into other storage devices, or the data exchange and integration is conducted.

FIG.2 is a block diagram of a control module according to a second embodiment of the present invention. Referring to FIG.2, the control module 200 of the second embodiment is approximately the same as the control module 100 in FIG.1, in which similar members are represented by similar designations and the introduction thereof is omitted. The difference between the control module 200 and the control module 100 is that the control module 200 further includes a third circuit board 230. The third circuit board 230, for example, is arranged with a first port 232, a second port 234, and a third port 236. In other embodiments, the three ports 232, 234 and 236 are also able to be arranged separately. The two sides of the first port 232 are electrically connected to the first contact 212 and the first circuit board 50, respectively. The two sides of the second port 234 are electrically connected to the second contact 214 and the second circuit board 70, respectively. The two sides of the third port 236 are electrically connected to the third contact 222 of the signal transformation module 220 and the storage device 30, respectively. Moreover, the first port 232 and the second port 234, for example, are USB ports or IEEE 1394 ports, and the third port 236, for example, is an IDE port or a SATA port.

Specifically, when the control module 200 is applied to a conventional desktop computer, it can be directly mounted on the IDE port or the SATA port of the storage device 30, and then the first circuit board 50 (for example, the motherboard of a portable computer) is connected with the second circuit board 70 (for example, the motherboard of a desktop computer) by the USB transmission line or the IEEE 1394 transmission line, thus the storage device 30 of the desktop computer is shared with the portable computer.

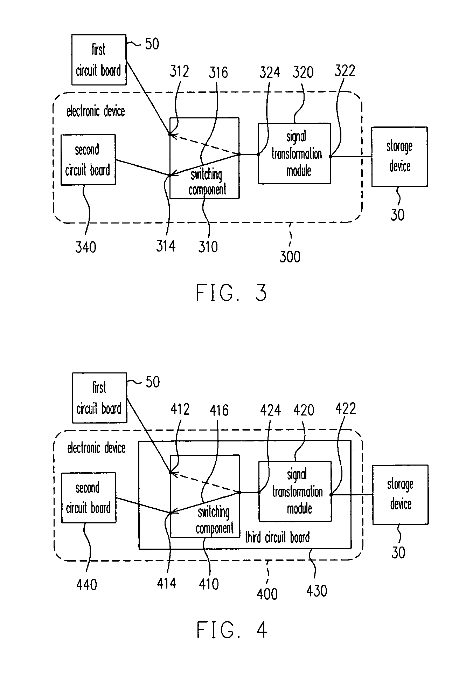

FIG.3 is a block diagram of an electronic device according to a third embodiment of the present invention. Referring to FIG.3, the electronic device 300 of the first embodiment is electrically connected with a storage device 30. The electronic device 300 includes a second circuit board 340, a switching component 310, and a signal transformation module 320. The switching component 310 has at least a first contact 312, a second contact 314, and a select switch 316. The first contact 312 is electrically connected to a first circuit board 50, and the second contact 314 is electrically connected to a second circuit board 340. The switch 316 is able to be electrically connected to the first contact 312 or the second contact 314. The signal transformation module 320 is electrically connected with the storage device 30 and the switching component 310. Moreover, the signal transformation module 320, similar to the signal transformation module 120 of FIG.1, further includes a third contact 322 and a fourth contact 324, and additional further details shall be omitted. Similar to the control module 100 of FIG.1, the storage device 30 is controlled and accessed by the electronic device 300 of the first embodiment, or the storage device 30 is switched to be controlled and accessed by the first circuit board 50. In other words, the electronic device 300, for example, is a notebook computer or a motherboard thereof.

FIG.4 is a block diagram of an electronic device according to a fourth embodiment of the present invention. Referring to FIG.4, the electronic device 400 of the fourth embodiment is approximately the same as the electronic device 300 of FIG.3, in which similar members are represented by similar designations and introduction thereof is omitted. The difference between the electronic device 400 and the electronic device 300 is that the electronic device 400 further includes a third circuit board 430, in which the switching component 410 and the signal transformation module 420 are arranged on the third circuit board 430. Specifically, the third circuit board 430, the switching component 410, and the signal transformation module 420 are able to be arranged on the storage device 30, and the second circuit board 440, for example, is a motherboard of a desktop computer.

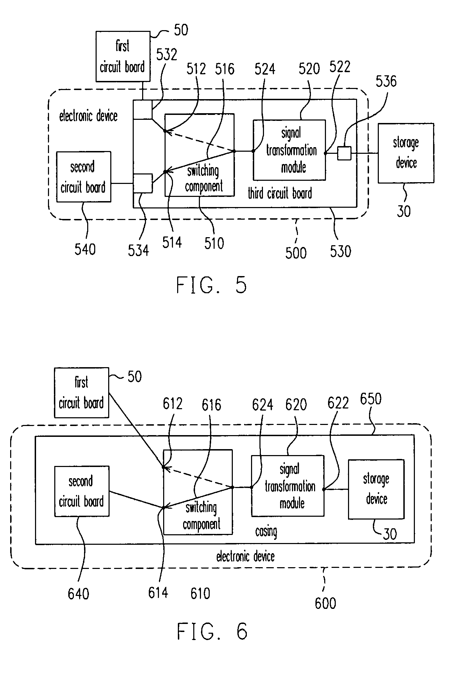

FIG.5 is a block diagram of an electronic device of a fifth embodiment of the present invention. Referring to FIG.5, the electronic device 500 of the fifth embodiment is approximately the same as the electronic device 400 of FIG.4, in which similar members are represented by similar designations and the introduction thereof is omitted. The difference between the electronic device 500 and the electronic device 400 is that the third circuit board 530 is further arranged with a first port 532, a second port 534, and a third port 536, in which the three ports 532, 534 and 536 are also able to be arranged separately. The specification and the connection of the ports 532, 534, and 536 are similar to those of the ports 232, 234, and 236 in FIG.2.

FIG.6 is a block diagram of an electronic device according to a sixth embodiment of the present invention. Referring to FIG.6, the electronic device 600 of the sixth embodiment is approximately the same as the electronic device 300 of FIG.3, in which represent similar members are represented by similar designations and the introduction thereof is omitted. The difference between the electronic device 600 and the electronic device 300 is that the electronic device 600 further includes a casing 650, in which the second circuit board 640 and the storage device 30 are disposed inside the casing 650, and the first circuit board 50 is disposed outside the casing 650. In other words, the storage device 30 is built in the electronic device 600, while the storage device 30 in the first embodiment of FIG.3 can be built in the electronic device 300 or can be an external storage device.

In summary, in the control module and the electronic device of the present invention, a storage device is electrically connected to a first circuit board or a second circuit board by a switching component, and the signals are transformed by the signal transformation module for enabling the storage device to conduct data access by the first circuit board or the second circuit board. Therefore, the user of the portable computer is able to have the data stored in the storage device of other computers controlled and accessed by the first circuit board, without having to carry an external storage device. Not only the cost of purchasing and taking the external storage device can be saved, but also the convenience for mobility is further enhanced, and the data in the portable computer can be easily backed up to other storage devices or the data exchange and integration can be conducted.

Although the present invention is disclosed as above by preferred embodiments, they are not intended to limit the present invention. Various variations and modifications can be made by those skilled in the art without departing from the spirit and scope of the present invention, and the scope of the present invention shall be defined by the appended claims.

## Claims

1. A control module, electrically connected with a storage device, a first circuit board, and a second circuit board, comprising:
a switching component, at least including a first contact, a second contact and a select switch, wherein the first contact is electrically connected to the first circuit board, the second contact is electrically connected to the second circuit board, and the select switch is electrically connected to the first contact or the second contact; and
a signal transformation module, wherein the signal transformation module is electrically connected with the storage device and the select switch.

2. The control module as set forth in claim 1, wherein the signal transformation module further comprises a third contact and a fourth contact, wherein the third contact is electrically connected with the storage device, and the fourth contact is electrically connected with the switching component.

3. The control module as set forth in claim 2, wherein a first data type is transmitted between the third contact and the storage device based on a first protocol type, and a second data type is transmitted between the fourth contact and the switching component based on a second protocol type, and the first data type is transformed by the signal transformation module into the second data type.

4. The control module as set forth in claim 3, wherein the first protocol type is an IDE protocol, and the second protocol type is a USB protocol.

5. The control module as set forth in claim 1, further comprising a third circuit board, wherein a first port is arranged at the third circuit board, and wherein a first side of the first port is electrically connected to the first contact, and a second side of the first port is electrically connected with the first circuit board.

6. The control module as set forth in claim 5, wherein the first port comprises a USB port or an IEEE 1394 port.

7. The control module as set forth in claim 1, further comprising a third circuit board, wherein a second port is arranged at the third circuit board, and wherein a third side of the second port is electrically connected to the second contact, and a fourth side of the second port is electrically connected with the second circuit board.

8. The control module as set forth in claim 7, wherein the second port comprises a USB port or an IEEE 1394 port.

9. The control module as set forth in claim 1, further comprising a third circuit board, wherein a third port is arranged at the third circuit board, and a seventh side of the third port is electrically connected to the signal transformation module, and an eighth side of the third port is electrically connected with the storage device.

10. The control module as set forth in claim 9, wherein the third port comprises an IDE port or a SATA port.

11. An electronic device, electrically connected with a storage device, comprising:
a second circuit board;
a switching component, having at least a first contact, a second contact and a select switch, wherein the first contact is electrically connected to a first circuit board, and the second contact is electrically connected to the second circuit board, and the select switch is electrically connected to the first contact or the second contact; and
a signal transformation module, electrically connected with the storage device and the select switch.

12. The electronic device as set forth in claim 11, wherein the signal transformation module further comprises a third contact and a fourth contact, the third contact is electrically connected with the storage device, and the fourth contact is electrically connected with the switching component.

13. The electronic device as set forth in claim 12, wherein a first data type is transmitted between the third contact and the storage device by a first protocol type, and a second data type is transmitted between the fourth contact and the switching component by a second protocol, and the first data type is transformed by the signal transformation module into the second data type.

14. The electronic device as set forth in claim 13, wherein the first protocol type is an IDE protocol, and the second protocol type is a USB protocol.

15. The electronic device as set forth in claim 11, further comprising a third circuit board, wherein a first port is arranged at the third circuit board, and a first side of the first port is electrically connected to the first contact, and a second side of the first port is electrically connected to the first circuit board.

16. The electronic device as set forth in claim 11, further comprising a third circuit board, wherein a second port is arranged at the third circuit board, a third side of the second port is electrically connected to the second contact, and a fourth side of the second port is electrically connected to the second circuit board.

17. The electronic device as set forth in claim 11, further comprising a third circuit board, wherein a third port is arranged at the third circuit board, a seventh side of the third port is electrically connected to the signal transformation module, and an eighth side of the third port is electrically connected with the storage device.

18. The electronic device as set forth in claim 11, further comprising a third circuit board, wherein the switching component and the signal transformation module are disposed at the third circuit board.

19. The electronic device as set forth in claim 11, further comprising a casing, wherein the second circuit board and the storage device are disposed inside the casing, and the first circuit board is disposed outside the casing.
